# EUROPÄISCHE PATENTSCHRIFT

(11) **EP 1 493 628 B1**
(45) Veröffentlichungstag und Bekanntmachung des Hinweises auf die Patenterteilung: **03.09.2008**
(21) Anmeldenummer: 04012999.1
(22) Anmeldetag: 02.06.2004
(51) Int. Cl.: B60R 11/04

(54) **Kamerasystem für ein Kraftfahrzeug**
Camera system for an automotive vehicle
Système de caméra pour un véhicule automobile

(30) Priorität: 03.07.2003 DE 10329900
(43) Veröffentlichungstag der Anmeldung: 05.01.2005
(73) Patentinhaber: Daimler AG, 70327 Stuttgart (DE)
(72) Erfinder: Eggers, Helmuth, Dr.-Ing., 89077 Ulm (DE); Kurz, Gerhard, Dipl.-Ing., 73240 Wendlingen (DE); Seekircher, Jürgen, Dr.-Ing., 73760 Ostfildern (DE); Wohlgemuth, Thomas, Dipl.-Ing., 72631 Aichtal (DE)

(56) Entgegenhaltungen:
- DE-A- 10 160 669
- DE-A1- 10 156 850
- US-A- 5 096 287

## Beschreibung

Die vorliegende Erfindung betrifft ein Kamerasystem zur Anbringung in einer Fahrgastzelle eines Kraftfahrzeugs. In den letzten Jahren sind derartige Kamerasysteme vorgeschlagen worden, um z.B. die Umgebung eines Fahrzeugs während der Fahrt fortlaufend zu beobachten und die dabei aufgenommenen Bilder in einem Datenspeicher aufzuzeichnen, der nach einer kurzen Speicherzeit fortlaufend überschrieben wird, so dass bei einem Unfall des Fahrzeugs Bilder von dessen Umgebung in den letzten Sekunden vor dem Unfall zur Verfügung stehen, die genutzt werden können, um evtl. die Unfallursache und die Schuld an dem Unfall zu klären. Eine andere Anwendung derartiger Kamerasysteme sind Systeme zur automatischen Fahrerunterstützung, die anhand der von einem solchen Kamerasystem gelieferten Bilder z.B. in der Lage sind, den Abstand zu einem vorausfahrenden Fahrzeug zu beurteilen und die Geschwindigkeit des Fahrzeugs an diesen Abstand mit einer höheren Reaktionsgeschwindigkeit anzupassen, als der Fahrer dies vermag, oder die in der Lage sind Ausnahmesituationen wie etwa ein Abkommen des Fahrzeugs von der Fahrbahn bei einem Sekundenschlaf des Fahrers zu erkennen und ein Warnsignal zu erzeugen, um den Fahrer zu wecken.

Für die Effektivität eines solchen Kamerasystems ist es wichtig, dass die Kamera ein unbeeinträchtigtes Blickfeld hat. Um eine Behinderung der Kamera durch Verunreinigungen einer Windschutzscheibe zu verhindern, hinter der sie angebracht ist, schlägt DE 43 29 983 A1 vor, die Kamera in einem Bereich der Windschutzscheibe eines Fahrzeugs zu platzieren, der von den Scheibenwischern gereinigt wird.

Eine Beeinträchtigung des Blickfeldes der Kamera durch ein Beschlagen der Scheibe von Innen kann gemäß dieser Schrift nicht verhindert werden.

In US 5 096 287 A1 wird ein Kamerasystem zur Anbringung in einem Kraftfahrzeug vorgeschlagen, bei der die in einem Halter des Innenraumspiegels des Fahrzeugs montierte und auf die Windschutzscheibe des Fahrzeugs ausgerichtete Kamera von einer Gegenlichtblende eingefasst ist, deren vorderer Rand an der Innenseite der Windschutzscheibe anliegt. Um ein Beschlagen der Scheibe im Blickfeld der Kamera zu verhindern, ist eine Blasluftleitung durch den Halter der Kamera geführt, durch die Luft in den Raum zwischen Kamera, Gegenlichtblende und Windschutzscheibe strömt, die anschließend durch Entlüftungslöcher der Gegenlichtblende abfließt. Diese Lösung ist sehr aufwendig zu realisieren, da sie die Heranführung von Druckluft durch eine im Dachhimmel des Fahrzeugs verlegte Leitung erfordert. Sie gewährleistet auch keine sofortige Abhilfe, wenn die Windschutzscheibe im Blickfeld der Kamera beschlagen ist. Es ist für den Fahrer auch nicht ohne weiteres möglich, zu beurteilen, ob das Blickfeld der Kamera frei ist, da die Gegenlichtblende den im Blickfeld der Kamera liegenden Bereich der Windschutzscheibe vor den Blicken des Fahrers verbirgt.

Die gaffungsbildende deutsche Offenlegungsschrift DE 101 56 850 A1 beschreibt ein Kameragehäuse für eine hinter der Windschutzscheibe eines Fahrzeuges angebrachte Kamera. Das Gehäuse umschließt hierbei den Raum zwischen Kamera und Windschutzscheibe und schützt hierdurch die Kamera vor Verschmutzung. Um einem Feuchtig keitsbeschlag innerhalb des Gehäuses entgegenzuwirken, ist vorgesehen, das Gehäuse mit einer Belüftungsöffnung zu versehen, welche mit einem staubdichten Filter versehen ist. Dabei ist dieser Filter lösbar angeordnet, so dass nach dessen entfernen ein Zugriff in das Gehäuse möglich wird, um im Falle von dennoch auftretender Verschmutzung oder Feuchtigkeitsbeschlag den Gehäuseinnenraum zu reinigen.

Aufgabe der vorliegenden Erfindung ist, ein Kamerasystem zur Anbringung einer Fahrgastzelle eines Kraftfahrzeuges anzugeben, bei dem einerseits die Kamera vor Störreflexen aus der Fahrgastzelle geschützt ist, bei dem aber andererseits der Fahrer Beeinträchtigungen der freien Sicht der Kamera leicht überprüfen und umgehend beseitigen kann.

Die Aufgabe wird gelöst durch ein Kamerasystem mit dem Merkmal des Anspruchs 1. Die Beweglichkeit der Blende erlaubt es dem Fahrer jederzeit, den Bereich der Fensterscheibe, durch den die Kamera nach außen blickt, freizulegen, um zu prüfen, ob das Blickfeld der Kamera ungestört ist, und im Bedarfsfall Niederschläge auf diesem Bereich der Scheibe oder auch auf der Frontlinse der Kamera zu beseitigen. Wenn nach einer solchen Operation die Blende wieder in ihre geschlossene Stellung gebracht wird, kann die Kamera ohne Störungen durch Reflexe aus der Fahrgastzelle arbeiten.

Einer ersten Ausgestaltung der Erfindung zufolge ist die Blende zwischen ihren beiden Stellungen schwenkbar. Vorzugsweise ist diese Blende an das Gehäuse der Kamera angelenkt, das seinerseits fest montiert sein kann. Denkbar ist aber auch, die Blende gemeinsam mit dem Gehäuse als eine zusammenhängende Einheit auf- und zuzuschwenken.

Da die Kamera ein für die Sicherheit des Fahrzeugs relevantes Gerät ist, das einen hohen Grad an Zuverlässigkeit aufweisen muss, empfiehlt es sich, für die Anlenkung der Blende ein gebremstes Scharnier zu verwenden, das beim Fahrer einen mit der erforderlichen Qualität der Kamera harmonierenden Eindruck hochwertiger Verarbeitung hinterlässt.

Einer zweiten Ausgestaltung zufolge ist die Blende zwischen ihren beiden Stellungen verschiebbar, und zwar sind der Einfachheit halber vorzugsweise die Blende und das Gehäuse als eine Einheit verschiebbar.

Zwischen dem Gehäuse und der Kamera ist vorzugsweise wenigstens ein Luftkanal gebildet, durch den Luft strömen kann, die Abwärme der Kamera aufnimmt und diese so kühlt.

Um die erwärmte Luft austreten und/oder Frischluft zuströmen zu lassen, ist das Gehäuse vorzugsweise mit Lüftungsöffnungen versehen. Ebenfalls zur Belüftung ist vorzugsweise zwischen der Fensterscheibe und einem der Fensterscheibe zugewandten Rand der Blende ein Spalt gebildet.

Es kommt häufig vor, dass Randzonen von Fensterscheiben von Kraftfahrzeugen mit einer lichtundurchlässigen Beschichtung versehen sind, um dahinterliegende Bereiche, an denen beispielsweise eine Befestigung der Scheibe angreift, zu kaschieren. Ein lichtundurchlässiger Bereich einer Fahrzeugfensterscheibe kann vorteilhaft genutzt werden, um dort ein transparentes Fenster freizulassen, durch das die Kamera blickt und das in der geschlossenen Stellung der Blende von dieser überdeckt wird. Wenn der Rand des Fensters vollständig von der Blende überdeckt ist, werden Toleranzen bei der Montage der Kamera gut verborgen. Wenn der lichtundurchlässige Bereich schwarz ist, ist er gleichzeitig wirksam als eine zusätzliche Streulichtblende für die Kamera.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch ein erfindungsgemäßes Kamerasystem gemäß einer ersten Ausgestaltung mit geschlossener Blende;
- Fig. 2: das Kamerasystem aus Fig. 1 mit offener Blende;
- Fig. 3: eine zweite Ausgestaltung des erfindungsgemäßen Kamerasystems in einem Schnitt analog dem der Fig. 1 und 2;
- Fig. 4: eine dritte Ausgestaltung des erfindungsgemäßen Kamerasystems in einem Schnitt analog dem der Fig. 1 und 2;
- Fig. 5: einen Schnitt durch das Kamerasystem der Fig. 4 entlang der Linie V-V aus Fig. 4;
- Fig. 6: eine vierte Ausgestaltung des erfindungsgemäßen Kamerasystems in einem Schnitt analog dem der Fig. 1 und 2; und
- Fig. 7: einen Schnitt durch das Kamerasystem der Fig. 6 entlang der Linie VII-VII aus Fig. 6.

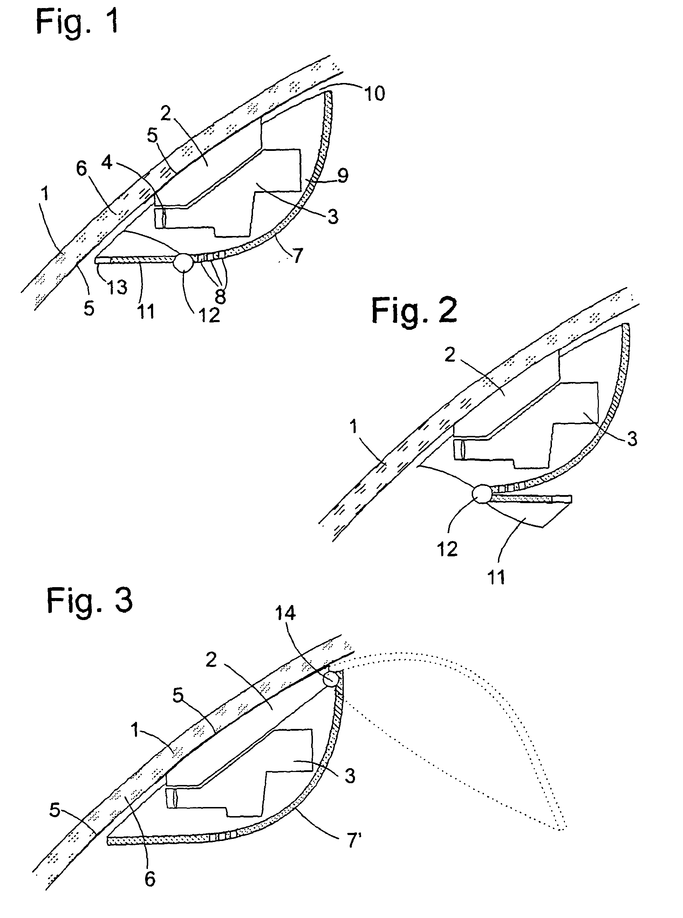

Fig. 1 zeigt einen schematischen Schnitt durch ein Kamerasystem gemäß einer ersten Ausgestaltung der Erfindung. An einer Windschutzscheibe 1 eines Kraftfahrzeugs ist ein Trägerkörper 2 festgeklebt, an dem wiederum eine elektronische Kamera 3 befestigt ist. Die Kamera 3 ist, da an sich bekannt, lediglich schematisch als Umriss dargestellt; lediglich ihre Frontlinse 4 ist angedeutet. Die Windschutzscheibe 1 ist an ihrer Innenseite mit einem Schwarzdruck 5 versehen, der das gesamte Kamerasystem nach außen hin verbirgt; lediglich ein durchsichtiges Fenster 6 ist freigelassen, durch das die Kamera 3 nach außen blickt.

Zur Fahrgastzelle hin ist die Kamera 3 durch ein schalenförmiges Gehäuse 7 abgedeckt, in dessen unteren Bereich eine Mehrzahl von Löchern 8 gebildet ist, die den Zustrom von Frischluft ins Innere des Gehäuses 7 unterhalb der Kamera 3 erlauben. Der Trägerkörper 2 ist in einer Richtung quer zur Schnittebene der Fig. 1 breiter als die Kamera 3 selbst und trägt an seinen seitlichen Flanken (nicht dargestellte) Rastmittel, die mit komplementären Rastmitteln des Gehäuses 7 zusammenwirken, um das Gehäuse 7 zu halten. Die Kamera 3 selbst berührt das Gehäuse 7 nicht, so dass an ihrer Rückseite und an beiden Seitenflanken sich Strömungskanäle 9 zwischen der Kamera 3 und dem Gehäuse 7 erstrecken, durch die über die Löcher 8 in das Gehäuse 7 eingedrungene Luft an der Kamera 3 entlang streicht, sich dabei erwärmt und schließlich durch einen Spalt 10 austritt, durch den das Gehäuse 7 von der Windschutzscheibe 1 beabstandet ist.

In einem vorderen unteren Bereich des Gehäuses 7 ist eine Blende 11 über ein Scharnier 12 an das Gehäuse 7 angelenkt. Die Blende 11 bildet, von außen betrachtet, eine bündige Fortsetzung des Gehäuses 7. Sie ist an der Windschutzscheibe 1 zugewandten Kante mit einem etwa fingerbreiten und -tiefen Ausschnitt 13 versehen, der es dem Fahrer ermöglicht, die Blende zu hintergreifen und sie aufzuklappen, wenn er prüfen möchte, ob das Fenster 6 klar ist, oder Beschlag von der Windschutzscheibe 1 abwischen will. Das Scharnier 12 ist gebremst, insbesondere weist es eine solche Reibung auf, dass das Aufklappen zwar dadurch nicht erschwert ist, dass es aber in jeder Stellung, auch zwischen der geschlossenen Stellung der Fig. 1 und der offenen Stellung der Fig. 2, stabil stehen bleibt, wenn es losgelassen wird.

Um die Reibung des Scharniers 12 nicht zu stark machen zu müssen, aber ein Öffnen der Blende 11 auch bei den Erschütterungen der Fahrt zuverlässig zu verhindern, können z.B. Magnetschnäpper vorgesehen sein, die den Verbleib der Blende 11 in der geschlossenen Stellung unterstützen.

Bei der Ausgestaltung der Fig. 3 sind das Gehäuse 7' und die Blende 11' einteilig verschmolzen, d.h. die Blende 11' ist ein einteiliger, über die Frontlinse 4 oder den Körper der Kamera 3 vorspringender Abschnitt des Gehäuses 7', das das Sichtfenster 6 der Kamera abschirmt, und das Gehäuse 7' ist als Ganzes über ein Scharnier 14 in seinem oberen hinteren Randbereich an den Trägerkörper 2 angelenkt. So ist das Gehäuse 7' aus seiner durchgezogen dargestellten geschlossenen Stellung in eine offene Stellung wie z.B. die in Fig. 3 gestrichelt dargestellte schwenkbar, in der nicht nur das Fenster 6, sondern auch die Kamera 3 frei liegt.

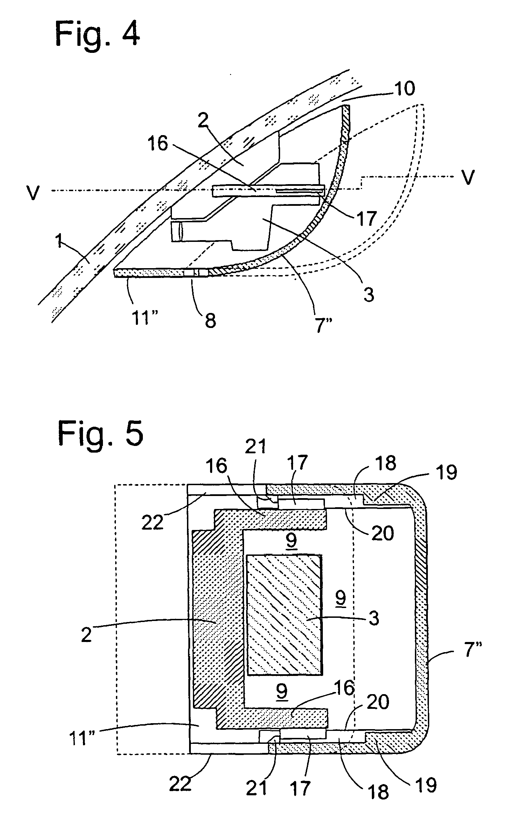

Fig. 4 zeigt eine dritte Ausgestaltung des erfindungsgemäßen Kamerasystems in einem Schnitt analog dem der Fig. 1-3, wobei das Gehäuse 7", in dem auch hier die Blende 11" einteilig mit verschmolzen ist, zwischen einer mit durchgezogenen Linien dargestellten geschlossenen Stellung und einer gestrichelt dargestellten offenen Stellung an Schienen verschiebbar ist. Diese Schienen sind gebildet durch zwei Auslegerarme 16, die ausgehend vom Trägerkörper 2 die Kamera 3 auf zwei Seiten um greifen und jeweils eine nach außen gerichtete Feder 17 tragen. Die zwei Federn 17 sind, wie in dem horizontalen Schnitt der Fig. 5 zu erkennen, in einer horizontalen Nut 18 geführt, die jeweils durch zwei von den Seitenflanken des Gehäuses 7' vorstehende Rippen 19, 20 gebildet sind. Zu der der Windschutzscheibe 1 zugewandten Vorderkante des Gehäuses 7" hin sind die zwei Nuten 18 jeweils durch eine Rastnase 21 abgeschlossen, die in deren in Fig. 5 durchgezogen dargestellten offenen Stellung jeweils an einem Ende der Federn 17 anschlägt und so ein vollständiges Abziehen des Gehäuses vom Trägerkörper 2 verhindert. Bei der Montage des Gehäuses 7" am Trägerkörper 2 werden die seitlichen Flanken 22 des Gehäuses kurzzeitig auseinander gespreizt, damit die Rastnasen 21 die Federn 17 passieren. Auf entsprechende Weise kann das Gehäuse 7" auch wieder abmontiert werden, um im Bedarfsfall auf die Kamera 3 zuzugreifen. Unter normalen Umständen erlaubt das Gehäuse 7" in der offenen Stellung jedoch nur einen Zugriff auf das Fenster 6 und die Frontlinse 4 der Kamera.

Auch hier ist die Kamera 3, wie im Schnitt der Fig. 5 deutlich zu sehen, an drei Seiten von Strömungskanälen 9 umgeben, in denen durch Löcher 8 an der Unterseite des Gehäuses 7' eingedrungene Luft an der Kamera 3 entlang streichen und schließlich durch den Spalt 10 zwischen Gehäuse 7' und Windschutzscheibe 1 wieder entweichen kann.

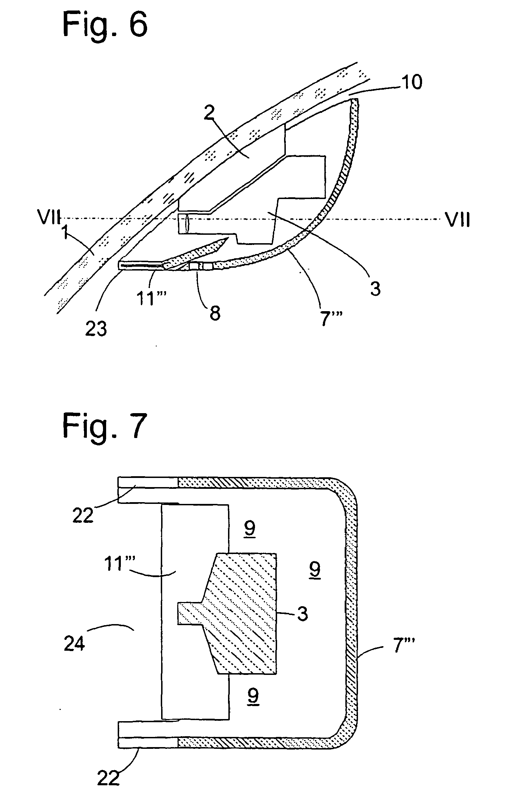

Figs. 6 und 7 zeigen eine vierte Ausgestaltung der Erfindung in zwei Schnitten analog denen der Figs 4 und 5. Gehäuse 7"' und Blende 11"' sind hier wieder zweiteilig ausgebildet, und zwar ist die plattenförmige Blende 11"' in Nuten 23 eines Ausschnitts 24 der Blende geführt zwischen einer (nicht dargestellten) geschlossenen Stellung, in der sie den Ausschnitt 24 bündig verschließt, und der in den Figs. gezeigten offenen Stellung verschiebbar, in der sie den Zugriff auf das Fenster 6 und die Frontlinse der Kamera 3 zulässt.

## Patentansprüche

1. Kamerasystem zur Anbringung in einer Fahrgastzelle eines Kraftfahrzeuges,
bei welchem eine Kamera (3) auf eine Fensterscheibe (1) der Fahrgastzelle ausgerichtet ist, bei weichem zwischen der Kamera (3) und der Fensterscheibe (1) eine Blende (11, 11', 11", 11''') angebracht ist,
und bei welchem die Blende (11, 11', 11", 11''') öffenbar und verschließbar ausgestaltet ist,
wobei die Blende (11, 11', 11", 11''') in geschlossenem Zustand die Kamera (3) gegen Streulicht aus der Fahrgastzelle abschirmt, und in geöffnetem Zustand den Zugriff auf die Frontlinse der Kamera ermöglicht,
**dadurch gekennzeichnet,**
**dass** die Kamera (3) von einem Gehäuse (7, 7', 7", 7''') umgeben ist, welches mit der Blende (11, 11', 11", 11''') in Verbindung steht,
**dass** ein Stellmechanismus (12, 14, 18, 19, 20, 23) vorgesehen ist, mittels welchem die Blende (11, 11', 11", 11''') in eine erste, den geschlossenen Zustand erzeugende Stellung und eine zweite den geöffnete Zustand erzeugende Stellung gestellt werden kann,
wobei der Stellmechanismus (12, 14, 18, 19, 20, 23) so ausgebildet ist, dass er die Bewegung der Blende (11, 11', 11", 11''') im Rahmen deren Verstellung von der ersten zur zweiten Stellung so vorgibt, dass diese sich von der Fensterscheibe (1) weg bewegt.

2. Kamerasystem nach Anspruch 1,
**dadurch gekennzeichnet,**
**dass** die Blende zwischen ihren beiden Stellungen schwenkbar ist.(11, 11')

3. Kamerasystem nach Anspruch 2,
**dadurch gekennzeichnet,**
**dass** die Blende (11) an das Gehäuse (7) des Kamerasystems angelenkt ist.

4. Kamerasystem nach Anspruch 3,
**dadurch gekennzeichnet,**
**dass** die Blende (11) mit dem Gehäuse (7) durch ein Scharnier (12) verbunden ist.

5. Kamerasystem nach Anspruch 1,
**dadurch gekennzeichnet,**
**dass** die Blende (11", 11"') zwischen ihren beiden Stellungen verschiebbar ist.

6. Kamerasystem nach Anspruch 5,
**dadurch gekennzeichnet,**
**dass** die Blende (11") und das Gehäuse (7") als eine Einheit verschiebbar sind.

7. Kamerasystem nach einem der vorhergehenden Ansprüche,
**dadurch gekennzeichnet,**
**dass** zwischen dem Gehäuse (7, 7', 7", 7"') und der Kamera (3) wenigstens ein Luftkanal (9) gebildet ist.

8. Kamerasystem nach Anspruch 7,
**dadurch gekennzeichnet,**
**dass** das Gehäuse (7, 7', 7", 7"') mit Lüftungsöffnungen (8) versehen ist.

9. Kamerasystem nach einem der vorhergehenden Ansprüche,
**dadurch gekennzeichnet,**
**dass** zwischen der Fensterscheibe (1) und einem der Fensterscheibe (1) zugewandten Rand des Gehäuses (7, 7', 7", 7"') ein Spalt (10) gebildet ist.

10. Kamerasystem nach einem der vorhergehenden Ansprüche, **dadurch gekennzeichnet, dass** an der Fensterscheibe (1) ein lichtundurchlässiger, vorzugsweise geschwärzter Bereich (5) gebildet ist, in welchem ein transparentes Fenster (6) freigelassen Ist, durch welches die Kamera (3) blickt.

## Claims

1. Camera system for fitting in a passenger cell of an automotive vehicle,
in which a camera (3) is aligned with a window pane (1) of the passenger cell,
in which a screen (11, 11', 11", 11''') is fitted between the camera (3) and the window pane (1),
and in which the screen (11, 11', 11", 11''') is designed such that it can be opened and closed,
wherein, in the closed state, the screen (11, 11', 11", 11''') shields the camera (3) against stray light from the passenger cell, and, in the open state, permits access to the front lens of the camera,
**characterized**
**in that** the camera (3) is surrounded by a housing (7, 7', 7", 7''') which is connected to the screen (11, 11', 11", 11'''),
**in that** an adjustment mechanism (12, 14, 18, 19, 20, 23) is provided, by means of which the screen (11, 11', 11", 11''') can be adjusted into a first position producing the closed state and into a second position producing the open state,
the adjustment mechanism (12, 14, 18, 19, 20, 23) being designed in such a manner that it predetermines the movement of the screen (11, 11', 11", 11''') within the context of the adjustment thereof from the first position to the second position in such a manner that said screen moves away from the window pane (1).

2. Camera system according to Claim 1, **characterized in that** the screen is pivotable between its two positions (11, 11').

3. Camera system according to Claim 2, **characterized in that** the screen (11) is coupled to the housing (7) of the camera system.

4. Camera system according to Claim 3, **characterized in that** the screen (11) is connected to the housing (7) by a hinge (12).

5. Camera system according to Claim 1, **characterized in that** the screen (11", 11''') is displaceable between its two positions.

6. Camera system according to Claim 5, **characterized in that** the screen (11") and the housing (7") are displaceable as one unit.

7. Camera system according to one of the preceding claims, **characterized in that** at least one air duct (9) is formed between the housing (7, 7', 7", 7''') and the camera (3).

8. Camera system according to Claim 7, **characterized in that** the housing (7, 7', 7", 7''') is provided with ventilation openings (8).

9. Camera system according to one of the preceding claims, **characterized in that** a gap (10) is formed between the window pane (1) and an edge of the housing (7, 7', 7", 7'''), which edge faces the window pane (1).

10. Camera system according to one of the preceding claims, **characterized in that** a light-impermeable, preferably blackened region (5) is formed on the window pane (1), in which region a transparent aperture (6), through which the camera (3) looks, is left free.

## Revendications

1. Système à caméra destiné à être installé dans une place de passager d'un véhicule automobile avec lequel une caméra (3) est dirigée vers une vitre (1) de la place de passager, avec lequel un obturateur (11, 11', 11'', 11''') est disposé entre la caméra (3) et la vitre (1) et avec lequel l'obturateur (11, 11', 11'', 11''') est configuré de manière à pouvoir être ouvert et fermé, l'obturateur (11, 11', 11'', 11''') dans l'état fermé protégeant la caméra (3) contre la lumière parasite en provenance de la place de passager et, dans l'état ouvert, permettant d'accéder à la lentille avant de la caméra, **caractérisé en ce que** la caméra (3) est entourée par un boîtier (7, 7', 7'', 7''') qui est en liaison avec l'obturateur (11, 11', 11'', 11'''), qu'il est prévu un mécanisme de positionnement (12, 14, 18, 19, 20, 23) au moyen duquel l'obturateur (11, 11', 11'', 11''') peut être placé dans une première position provoquant l'état fermé et dans une deuxième position provoquant l'état ouvert, le mécanisme de positionnement (12, 14, 18, 19, 20, 23) étant configuré de telle sorte qu'il prédéfinit le mouvement de l'obturateur (11, 11', 11'', 11''') dans le cadre de son positionnement de la première position vers la deuxième position de manière à ce que celui-ci s'éloigne de la vitre (1).

2. Système à caméra selon la revendication 1, **caractérisé en ce que** l'obturateur peut pivoter (11, 11') entre ses deux positions.

3. Système à caméra selon la revendication 2, **caractérisé en ce que** l'obturateur (11) est articulé au boîtier (7) du système à caméra.

4. Système à caméra selon la revendication 3, **caractérisé en ce que** l'obturateur (11) est relié avec le boîtier (7) par le biais d'une charnière (12).

5. Système à caméra selon la revendication 1, **caractérisé en ce que** l'obturateur (11'', 11''') peut coulisser entre ses deux positions.

6. Système à caméra selon la revendication 5, **caractérisé en ce que** l'obturateur (11'') et le boîtier (7'') peuvent coulisser d'un seul bloc.

7. Système à caméra selon l'une des revendications précédentes, **caractérisé en ce qu'**au moins un canal d'air (9) est formé entre le boîtier (7, 7', 7'', 7''') et la caméra (3).

8. Système à caméra selon la revendication 7, **caractérisé en ce que** le boîtier (7, 7', 7'', 7''') est muni d'ouvertures de ventilation (8).

9. Système à caméra selon l'une des revendications précédentes, **caractérisé en ce qu'**une fente (10) est formée entre la vitre (1) et le bord du boîtier (7, 7', 7'', 7''') qui fait face à la vitre (1).

10. Système à caméra selon l'une des revendications précédentes, **caractérisé en ce qu'**une zone (5) opaque, de préférence noircie, est formée sur la vitre (1), dans laquelle est dégagée une fenêtre transparente (6) à travers laquelle s'effectue la visée de la caméra (3).
